# EUROPÄISCHE PATENTSCHRIFT

(11) **EP 1 323 368 B1**
(45) Veröffentlichungstag und Bekanntmachung des Hinweises auf die Patenterteilung: **22.06.2005**
(21) Anmeldenummer: 02028685.2
(22) Anmeldetag: 21.12.2002
(51) Int. Cl.: A47K 3/00, A47K 3/02, A47K 3/40, B29C 33/42

(54) **Verfahren- und Formvorrichtung zur Herstellung eines Wannenkörpers und nach dem Verfahren hergestellte Wannenkörper**
Method and mould for producing a bathtub and the produced bathtub
Procédé et moule pour fabriquer des baignoires et baignoire correspondante

(30) Priorität: 28.12.2001 DE 10164026; 23.02.2002 DE 10207927
(43) Veröffentlichungstag der Anmeldung: 02.07.2003
(73) Patentinhaber: Hüppe GmbH & Co., D-26160 Bad Zwischenahn (DE)
(72) Erfinder: Pilster, Bernd, 28205 Bremen (DE); Rolfes, Wilhelm, 49681 Garrel (DE); Heinen, Olaf, 26180 Rastede (DE); Eggers, Burghardt, 26160 Bad Zwischenahn (DE); Brandt, Wolfgang, 26655 Ocholt (DE)
(74) Vertreter: Eisenführ, Speiser & Partner

(56) Entgegenhaltungen:
- EP-A- 0 619 973
- WO-A-00/07489
- US-A- 2 809 380
- US-A- 3 363 267
- US-A- 3 942 199

## Beschreibung

Die Erfindung betrifft ein Verfahren zur Herstellung eines Wannenkörpers, bei dem in einem Formvorgang eine aushärtbare Masse in eine Form gefüllt wird, welche einen Hohlraum aufweist, der etwa dem Wannenkörper entspricht und die Masse sich in der Form verfestigt und nach dem Verfestigen aus der Form entnommen wird, wobei Bereiche der zum Hohlraum weisenden Oberfläche der Form mit einer Negativstruktur versehen sind und dadurch während des formvorgangs entsprechende Bereiche der Oberfläche des Wannenkörpers mit einer der Negativstruktur entsprechenden, rutschhemmende Oberflächenstruktur versehen werden. Die Erfindung betrifft weiterhin eine Formvorrichtung zur Herstellung eines Wannenkörpers und einen mittels des Verfahrens und der Formvorrichtung hergestellten Wannenkörper.

Es ist bekannt, Wannenkörper, wie Dusch- oder Badewannen, aus einer aushärtbaren Masse herzustellen. Dabei wird eine Formvorrichtung zunächst mit einem Trennmittel beschichtet und dann mit einer sogenannten Gelcoat-Lackierung versehen, welche die spätere Oberfläche der Wanne bildet. Nach einer Vorhärtung der Gelcoat-Schicht wird die Masse in einem formbaren Zustand in die vorbeschichtete Form gefüllt, wobei sie an der Gelcoat-Lackierung haftet und in der Form aushärtet.
Dabei ist es beispielsweise üblich, als Formmasse Materialien zu verwenden, die zunächst, nach Vermischung zweier oder mehrerer Ausgangsstoffe, in einem flüssigen oder pastösen Zustand formbar sind und sich nach einer bestimmten Reaktionsverzögerungszeit chemisch vernetzen und dabei aushärten (z.B. duroplastische Kunststoffe, ggfs mit keramischen Füllerzusätzen).

Weiterhin können Massen verwendet werden, deren Verformbarkeit beispielsweise durch Erwärmung erreicht werden, die Aushärtung tritt dann durch Abkühlung der Masse in der Form ein.

Die zur Herstellung des Wannenkörpers verwendete Form weist regelmäßig einen Hohlraum auf, dessen Kontur der gewünschten Form des Wannenkörpers entspricht. Üblicherweise muss der Wannenkörper nach Entnahme aus der Form nachbearbeitet werden. Diese Nachbearbeitung kann beispielsweise eine Entfernung von Graten, eine Oberflächenbehandlung und das Einbringen von Löchern, Gewindebohrungen etc. umfassen.

Ein Verfahrensschritt der Nachbehandlung kann, insbesondere bei der Herstellung von Duschwannen, das Aufrauen der Oberfläche der Duschwanne im Standbereich sein. Dies ist erforderlich, um dem Benutzer der Duschwanne eine ausreichende Standsicherheit auf der nassen Oberfläche der Duschwanne zu geben. Es ist bekannt, diese Aufrauung der Oberfläche durch Aufkleben von rauen Folien zu erzielen. Diese Methode weist den Nachteil auf, dass die Folien im Verlaufe des Gebrauchs des Wannenkörpers sich ablösen können und das ästhetische Gesamtbild des Wannenkörpers stören. Weiterhin ist bekannt, die aufzurauenden Bereiche des Wannenkörpers mittels mechanischer Nachbehandlungsverfahren wie Meißeln, Fräsen oder Perlenstrahlen aufzurauen. Diese Verfahren sind aufwendig, da oftmals nur bestimmte Bereiche, wie z. B. kreis- oder streifenförmige Erhebungen in der Standfläche, aufgeraut werden sollen. Um zu vermeiden, dass die Bereiche, welche nicht aufgeraut werden sollen, durch das Nachbehandlungsverfahren aufgeraut werden, ist es erforderlich, diese Bereiche vor der mechanischen Nachbehandlung abzudecken, beispielsweise abzukleben. Dies ist zeit- und kostenintensiv.

In der WO 0007489 ist ein schalenförmiges Element insbesondere eine Dusch- oder Badewanne offenbart, die als ein Kunststoffspritzgussteil hergestellt ist. Das offenbarte schalenförmige Element ist von den Materialstärken her so ausgelegt, dass es eine Person, die sich in oder auf dem schalenförmigen Element befindet, ohne zusätzliche Stützen oder Streben tragen kann.

Die US 3,942,199 offenbart rutschhemmende Oberflächen für Dusch- und Badewannen sowie für Sportgeräte wie Surfbretter. Im Falle einer Emailleoberfläche wird das nachträgliche Aufrauen dieser Emailleoberfläche mittels Ätzen oder Sandstrahlen vorgeschlagen.

In der US 3,363,267 ist eine Duschwanne offenbart, die auf ihrer Unterseite integrale Verstrebungen zur Erhöhung der Stabilität der Duschwanne aufweist. Die Oberfläche der Duschwanne ist im Standbereich eines Benutzers durch Erhöhungen und zwischen diesen liegenden Rinnen rutschhemmend ausgebildet.

Gemäß der US 2,809,380 wird eine rutschhemmende Oberfläche für Badewannen und Duschwannen vorgeschlagen, die eine Vielzahl von kleinen Rinnen und Kanälen zum gezielten Abführen von Wasser aufweist.

In der EP 0 619 973 sind Bade- und Duschwannen bei denen der Boden mit Rutschhemmflächen versehen ist offenbart. Diese Rutschhemmflächen werden durch nachträgliches Aufrauen der Glanzoberfläche des Bodens der Bade- oder Duschwanne gebildet.

Der Erfindung liegt daher die Aufgabe zugrunde, ein Verfahren bereitzustellen, mit welchem bestimmte Bereiche der Oberfläche von Wannenkörpern zeitsparend und kostengünstig aufgeraut werden können.

Die Erfindung löst die Aufgabe durch ein Verfahren der eingangs genannten Art, indem die Oberfläche der Form mittels eines Strahlverfahrens mit körnigem Granulat aufgeraut ist.

Das erfindungsgemäße Verfahren weist den Vorteil auf, dass bereits während des Formvorgangs bestimmte Oberflächenbereiche des Wannenkörpers mit einer definierten Oberflächenrauhigkeit versehen werden. Es ist somit nicht erforderlich, in einem dem Formvorgang folgenden Verfahrensschritt Bereiche der Oberfläche aufzurauen. Insbesondere können in einfacher Weise bestimmte Strukturen von strukturierten Wannenkörperoberflächen aufgeraut werden. So können beispielsweise nur einzelne Vertiefungen der Oberfläche der Form mit einer Negativstruktur versehen werden und dadurch erreicht werden, dass nur entsprechende Erhebungen des hergestellten Wannenkörpers mit der der Negativstruktur entsprechenden Inversstruktur aufgeraut sind. Es ist somit nicht erforderlich, nachträglich Bereiche des Wannenkörpers abzukleben und den solcher Art präparierten Wannenkörper mechanisch aufzurauen, um bestimmte Bereiche des Wannenkörpers aufzurauen.

Eine vorteilhafte Ausführungsform des Verfahrens sieht vor, dass die aushärtbare Masse ein Kunststoff oder ein keramischer Werkstoff ist. Grundsätzlich können dabei alle zur Herstellung von Wannenkörpern gebräuchlichen Materialien verwendet werden.

Die Erfindung umfasst weiterhin eine Formvorrichtung zur Herstellung eines Wannenkörpers, welche einen Hohlraum aufweist, der etwa dem Wannenkörper entspricht und bei der Bereiche der zum Hohlraum weisenden Oberfläche mit einer Negativstruktur, welche einer rutschhemmenden Oberflächenstruktur entspricht, versehen sind, wobei die Oberfläche mittels eines Strahlverfahrens mit körnigem Granulat aufgeraut ist.

Die Formvorrichtung ist dazu geeignet, mit einer verformbaren, aushärtbaren Masse gefüllt zu werden. Diese Masse härtet in der Form zumindest teilweise aus und weist nach dem Formvorgang in den Bereichen, welche an den mit einer Negativstruktur versehenen Bereichen der Formvorrichtungsanlagen, eine entsprechende rutschhemmende Oberflächenstruktur auf.
In vorteilhafter Weise weist die Qbefläche der Form kreisförmige Erhebungen und/oder Vertiefungen auf. Weiterhin kann die Oberfläche streifenförmige Erhebungen und/oder Vertiefungen aufweisen.

Eine vorteilhafte Weiterbildungsform der Formvorrichtung sieht vor, dass die kreis- oder streifenförmigen Erhebungen und/oder die kreis- oder streifenförmigen Vertiefungen mit einer Negativstruktur, welche einer rutschhemmenden Oberflächenstruktur entspricht, versehen sind.

Hierdurch wird in einfacher Weise erreicht, dass nur kreis- oder streifenförmige Vertiefungen und/oder Erhebungen des Mittels der Formvorrichtung hergestellten Wannenkörpers mit einer rutschhemmenden Oberflächenstruktur versehen werden.

In gleicher Weise können nur Bereiche der Formoberfläche mit Ausnahme der Vertiefungen und/oder Erhebungen mit der Negativstruktur versehen werden. Hierdurch wird erreicht, das entsprechende Bereiche des mit der Formvorrichtung hergestellten Wannenkörpers mit Ausnahme der kreis- oder streifenförmigen Vertiefungen und/oder Erhebungen mit einer rutschhemmenden Oberflächenstruktur versehen werden.

Die Erfindung umfasst weiterhin einen Wannenkörper, insbesondere eine Dusch- oder Badewanne mit einer als Benutzerstandfläche ausgebildeten Oberfläche, bei der bestimmte Bereiche der Oberfläche eine aufgeraute Oberflächenstruktur aufweisen, welche der inversen Struktur einer durch ein Strahlverfahren mit körnigem Granulat aufgerauten Oberfläche entsprechen.

Der erfindungsgemäße Wannenkörper wurde in einer Formvorrichtung, welche eine zum Hohlraum der Formvorrichtung weisende Oberfläche aufweist und bei der in dieser Oberfläche bestimmte Bereiche mit einer Negativstruktur versehen sind, hergestellt. Die Negativstruktur in der zur Herstellung des Wannenkörpers benutzten Formvorrichtung ist durch einen Strahlvorgang mit körnigem Granulat bereichsweise aufgeraut worden.

Eine vorteilhafte Weiterbildungsform des erfindungsgemäßen Wannenkörpers sieht vor, dass in der Oberfläche des Wannenkörpers kreis- oder streifenförmige Vertiefungen und/oder Erhebungen ausgebildet sind und nur diese Vertiefungen und/oder Erhebungen und/oder Bereiche der restlichen Oberfläche des Wannenkörpers mit Ausnahme der Vertiefungen und/oder Erhebungen die rutschhemmende Oberflächenstruktur aufweisen.

Eine bevorzugte Ausführungsform der erfindungsgemäßen Formvorrichtung soll anhand der Figuren beschrieben werden. Es zeigen:
- Figur 1:: eine geschnittene Seitenansicht einer Ausführungsform der Formvorrichtung,
- Figur 2:: eine Draufsicht auf die Formvorrichtung nach Fig. 1, und
- Figur 3:: eine Draufsicht auf eine zweite Ausführungsform der Formvorrichtung:

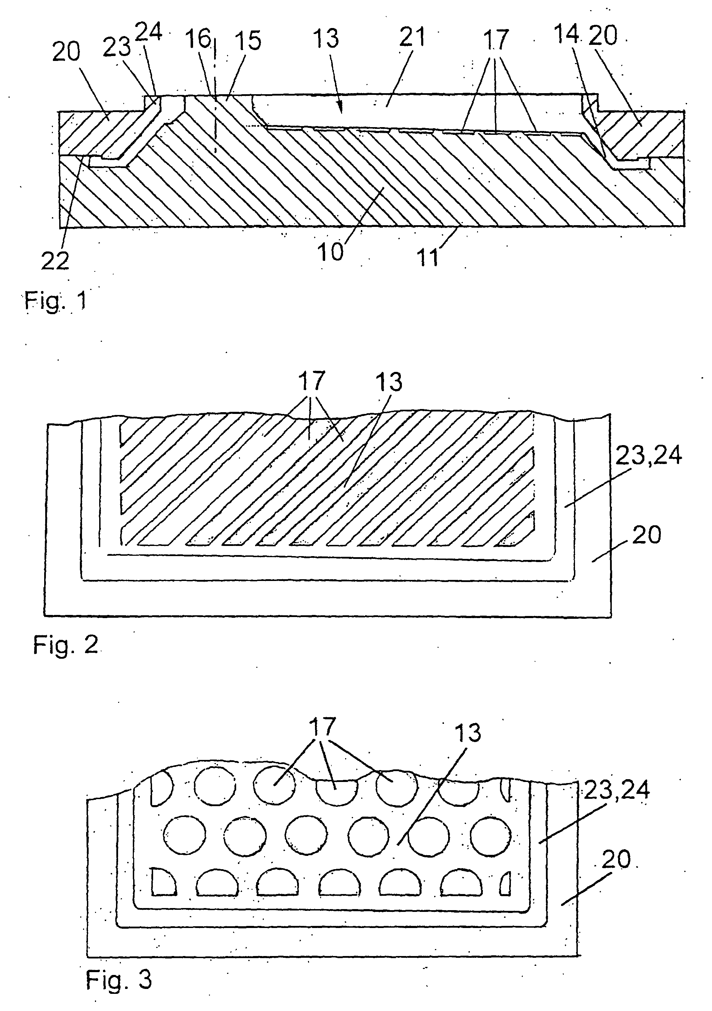

Es ist anzumerken, dass Fig. 2 und Fig. 3 in ebensolcher Weise eine Draufsicht auf zwei Ausführungsformen einer Wanne darstellen können, welche mit Hilfe der Formvorrichtung hergestellt wurde.

In Fig. 1 ist eine zweiteilige Formvorrichtung zur Herstellung von Duschwannen gezeigt. Die Formvorrichtung besteht aus einem Formboden 10 und einem Formrahmen 20. Der Formrahmen 20 ist auf den Formboden 10 aufgesetzt.

Der Formboden 10 ist auf seiner Unterseite 11 flach ausgebildet. Die der Unterseite 11 gegenüberliegende Fläche des Formbodens 10 weist eine Kontur auf, welche der Oberfläche einer Duschwanne entspricht. Diese konturierte Fläche 13, 14, 15 setzt sich zusammen aus der Formfläche 13 für die spätere Standfläche der Duschwanne, der Formfläche 14 für den späteren Randbereich der Duschwanne und dem Formabschnitt 15 für die Ablauföffnung der Duschwanne. Der Formabschnitt 15 ist zylindrisch um eine senkrecht zur Unterfläche der Formvorrichtung stehende Achse ausgebildet.

Der Formrahmen 20 ist als rechtwinkliger Rahmen ausgebildet und liegt auf dem Formboden 10 im Randbereich auf. Der Formrahmen 20 weist eine große Mittelöffnung 21 auf, in welche eine Formmasse gefüllt werden kann. Bei der Kontaktfläche 22 liegt die Unterseite des Formrahmens 20 auf dem Randbereich des Formbodens 10 auf und dichtet gegen diesen ab. Auf diese Weise kann die durch die Öffnung 21 eingefüllte Formmasse nicht seitlich zwischen dem Formboden 10 und dem Formrahmen 20 austreten. Auf seiner Oberseite weist der Formrahmen 20 eine umlaufende, rechtwinklige Erhebung 23 auf.

Die obere Fläche 24 der umlaufenden Erhebung 23 liegt auf gleicher Höhe wie die obere Fläche 16 des Formabschnitts 15. Durch obere Fläche 24 bzw. die obere Fläche 16 ist die maximale Füllhöhe der Formmasse begrenzt. Die Formfläche 13 für die spätere Standfläche der Duschwanne weist eine Vielzahl von Vertiefungen 17 auf. Diese Vertiefungen bewirken, dass in der Standfläche der mit der Formvorrichtung erzeugten Duschwanne eine Vielzahl von Erhebungen ausgebildet ist.

Die Vertiefungen können in verschiedener Weise in die Formvorrichtung eingebracht werden. Dabei ist insbesondere zu berücksichtigen, aus welchem Material die Formvorrichtung besteht, hier sind beispielsweise verschiedene Kunststoffe gebräuchlich, aber auch Holz oder Metalle. Bei bestimmten Formvorrichtungsmaterialen können die Vertiefungen in einem Arbeitsschritt durch einen Strahlvorgang eingebracht werden und zugleich die Bodenfläche der Vertiefungen 17 dabei aufgerauht werden. Bei anderen Formvorrichtungsmaterialen können die Vertiefungen in anderer Weise bspws. beim Urformen der Form oder durch spanende Bearbeitungsverfahren eingebracht werden. Die Bodenfläche der Vertiefungen 17 wird dann in einem weiteren Arbeitsschritt durch einen Strahlvorgang aufgeraut.

Je nach gewünschter Rautiefe kann beim Strahlvorgang mit verschiedenem Granulat, wie beispielsweise Glasperlen oder Glasmehl, gestrahlt werden und zusätzlich die Strahlparameter, wie Strahldauer, Strahldruck und Strahlentfernung, variiert werden. Durch diese Rauhigkeit des Bodens der Vertiefungen 17 wird erreicht, dass die in die Vertiefungen 17 ausgeformten Erhebungen der mit der Formvorrichtung hergestellten Duschwanne auf Ihre Oberseite eine bestimmte Rauhigkeit aufweisen, welche der Standsicherheit des Benutzers der Duschwanne dient.

In Fig. 2 ist eine Draufsicht auf die Formvorrichtung der Figur 1 gezeigt. Es ist erkennbar, dass die Erhebung 23 des Formrahmens 20 rechtwinklig ist und dass die Vertiefungen 17 in der Formfläche 13, gegen welche die spätere Standfläche der Duschwanne abgeformt wird, als streifenförmige Vertiefungen ausgebildet sind. Die Bodenflächen der Vertiefungen 17 sind mittels eines Strahlverfahrens aufgeraut.

In Fig. 3 ist eine Ausführungsform dargestellt, die in gleicher Weise aufgebaut ist wie die Formvorrichtung der Figuren 1 und 2. Die Vertiefungen 17 der in Fig. 3 dargestellten Formvorrichtungen sind als kreisförmige Vertiefungen ausgebildet. Die kreisförmige Bodenfläche der Vertiefungen 17 ist mittels eines Strahlverfahrens aufgeraut.

Bezug nehmend zu Fig. 1 soll ein bevorzugter Verfahrensablauf des erfindungsgemäßen Verfahrens erläutert werden.

In einem ersten Schritt des Formvorgangs wird der Formrahmen 20 bündig auf den Formboden 10 aufgesetzt und ggf. in der umlaufenden Kontaktfläche 22 abgedichtet. Für die weiteren Verfahrensschritte ist es wichtig, zu kontrollieren, dass die Formvorrichtung eben steht, d. h. die Unterseite 11 der Formvorrichtung senkrecht zur Schwerkraft ausgerichtet ist. Darauf folgend wird die flüssige Formmasse durch die Öffnung 21 im Formrahmen 20 eingefüllt. Dabei wird soviel Formmasse eingefüllt, bis eine Füllhöhe erreicht wird, welche der oberen Fläche 24, 16 der umlaufenden Erhebung bzw. des Formabschnitts für die Ablauföffnung der Duschwanne 15 entspricht. Nach dem ersten Füllvorgang kann es ggf. erforderlich sein, etwas Formmasse nachzufüllen, um eine Schwindung auszugleichen.

Hiernach wird eine gewisse Zeitspanne abgewartet, bis die Formmasse in der Formvorrichtung ausgehärtet ist. Dies kann beispielsweise bei thermoformbaren Formmassen durch Abkühlung erreicht werden. Bei duroplastischen, sich vernetzenden Formmassen ist solange abzuwarten bis die chemische Vernetzungsreaktion abgelaufen ist.

Nach Aushärtung der Formmasse wird der Formrahmen 20 nach oben abgenommen. Hiernach kann die ausgehärtete Duschwanne vom Formboden 10 entnommen werden.

Die so hergestellte Duschwanne weist im Bereich ihrer Standfläche mehrere Erhebungen auf, welche auf ihrer Oberseite eine bestimmte Rauhigkeit aufweisen. Wie zuvor beschrieben, können Fig. 2 und Fig. 3 auch eine Draufsicht auf eine mit der Formvorrichtung hergestellt Wanne darstellen. In diesem Fall stellen 17 aufgerauhte Bereiche im Standbereich der Wanne dar, welche gegenüber der übrigen Standfläche 13 erhoben sind. Mit den Bezugszeichen 23, 24 ist eine Draufsicht auf die schräg verlaufenden, seitlichen Begrenzungswände des Wannenraums bezeichnet, 20 bezeichnet den oberen Wannenrand.

## Patentansprüche

1. Verfahren zur Herstellung eines Wannenkörpers, bei dem in einem Formvorgang
eine aushärtbare Masse in einer Form gefüllt wird, die Form einen Holraum aufweist, der etwa dem Wannenkörper entspricht,
die Masse sich in der Form verfestigt und nach dem Verfestigen aus der Form entnommen wird, wobei Bereiche der zum Hohlraum weisenden Oberfläche (13, 14, 15) der Form mit einer Negativstruktur versehen sind und **dadurch** während des Formvorgangs entsprechende Bereiche der Oberfläche des Wannenkörpers mit einer der Negativstruktur entsprechenden, rutschhemmenden Oberflächenstruktur versehen werden,
**dadurch gekennzeichnet, dass** die Oberfläche der Form mittels eines Strahlverfahrens mit körnigem Granulat aufgeraut ist.

2. Verfahren nach Anspruch 1,
**dadurch gekennzeichnet, dass** die aushärtbare Masse ein Kunststoff ist.

3. Formvorrichtung zur Herstellung eines Wannenkörpers mit einem Hohlraum, der etwa dem Wannenkörper entspricht und eine zum Hohlraum weisende Oberfläche (13, 14, 15) aufweist, wobei Bereiche der Oberfläche mit einer Negativstruktur versehen sind,
**dadurch gekennzeichnet, dass** die Oberfläche mittels eines Strahlverfahrens mit körnigem Granulat aufgeraut ist.

4. Formvorrichtung nach Anspruch 3,
**dadurch gekennzeichnet, dass** die Oberfläche kreisförmige Erhebungen und/oder Vertiefungen (17) aufweist.

5. Formvorrichtung nach Anspruch 3 oder 4,
**dadurch gekennzeichnet, dass** die Oberfläche (13, 14, 15) streifenförmige Erhebungen und/oder Vertiefungen aufweist.

6. Formvorrichtung nach Anspruch 4 oder 5,
**dadurch gekennzeichnet, dass** die kreis- oder streifenförmigen Erhebungen und/oder Vertiefungen (17) mit einer Negativstruktur versehen sind.

7. Wannenkörper, insbesondere Dusch- oder Badewanne, mit einer als Benutzerstandfläche ausgebildete Oberfläche,
**dadurch gekennzeichnet, dass** Bereiche der Oberfläche eine aufgeraute Oberflächenstruktur aufweisen, welche der inversen Struktur einer durch ein Strahlverfahren mit körnigem Granulat aufgerauten Oberfläche entsprechen.

8. Wannenkörper nach Anspruch 7,
**dadurch gekennzeichnet, dass** Bereiche der Oberfläche des Wannenkörpers als kreis- oder streifenförmige Vertiefungen und/oder Erhebungen ausgebildet sind und die Vertiefungen und/oder Erhebungen und/oder die Oberfläche mit Ausnahme der Vertiefungen und/oder Erhebungen aufgeraut wurden, indem sie bei der Formgebung des Wannenkörpers gegen eine durch ein Strahlverfahren mit körnigem Granulat gestrahlte Oberfläche der Form geformt wurde.

## Claims

1. Method for producing a bathtub, whereby in a moulding process a hardening material is filled into a mould, the mould comprising a hollow chamber which corresponds generally to the bathtub, the material hardens in the mould and after hardening is removed from the mould, whereby areas of the surface (13, 14, 15) of the mould facing towards the hollow chamber are provided with a negative structure, and thereby during the moulding process corresponding areas of the surface of the bathtub are provided with an antislip surface structure corresponding with the negative structure, **characterised in that** the surface of the mould is roughened in a blasting procedure using a granular granulate.

2. Method according to claim 1, **characterised in that** the hardening material is a plastic.

3. Mould device for producing a bathtub with a hollow chamber which corresponds generally to the bathtub and has a surface (13, 14, 15) facing towards the hollow chamber, whereby areas of the surface are provided with a negative structure, **characterised in that** the surface is roughened in blasting procedure using a granular granulate.

4. Mould device according to claim 3, **characterised in that** the surface has circular elevations and/or depressions (17).

5. Mould device according to claim 3 or 4, **characterised in that** the surface (13, 14, 15) has stripe-like elevations and/or depressions.

6. Mould device according to claim 4 or 5, **characterised in that** the circular or stripe-like elevations and/or depressions (17) are provided with a negative structure.

7. Bathtub, in particular a shower tray or bath, with a surface designed as a standing surface for the user, **characterised in that** areas of the surface have a roughened structure, which correspond to the inverse structure of a surface roughened in a blasting procedure using granular granulate.

8. Bathtub according to claim 7, **characterised in that** areas of the surface of the bathtub are designed as circular or stripe-like depressions and/or elevations, and the depressions and/or elevations and/or the surface have been roughened with the exception of the depressions and/or elevations, **in that** during the moulding of the bathtub they have been formed on a surface of the mould blasted with a granular granulate in a blasting procedure.

## Revendications

1. Procédé de fabrication d'un corps de baignoire dans lequel une masse durcissable est chargée dans un moule au cours d'un processus de moulage, le moule comporte une cavité, qui correspond à peu près au corps de baignoire, la masse se consolide dans le moule et est retirée du moule après la consolidation, sachant que des zones de la surface du moule donnant sur la cavité (13, 14, 15) sont équipées d'une structure négative et, de ce fait, pendant le processus de moulage des zones correspondantes de la surface du corps de baignoire sont équipées d'une structure de surface freinant le glissement correspondant à la structure négative, **caractérisé en ce que** la surface du moule est rendue rugueuse par un procédé de rayonnement avec des granulés rugueux.

2. Procédé selon la revendication 1, **caractérisé en ce que** la masse durcissable est une matière plastique.

3. Dispositif de moulage pour la fabrication d'un corps de baignoire avec une cavité qui correspond à peu près au corps de baignoire et comporte une surface donnant sur la cavité (13, 14, 15), sachant que des zones de la surface sont équipées avec une structure négative, **caractérisé en ce que** la surface est rendue rugueuse par un procédé de rayonnement avec des granulés rugueux.

4. Dispositif de moulage selon la revendication 3, **caractérisé en ce que** la surface comporte des bosses et/ou des cavités de forme circulaire (17).

5. Dispositif de moulage selon la revendication 3 ou 4, **caractérisé en ce que** la surface (13, 14, 15) comporte des bosses et/ou des cavités en forme de rayures.

6. Dispositif de moulage.selon la revendication 4 ou 5, **caractérisé en ce que** les bosses et/ou cavités en forme de cercles ou de rayures (17) sont équipées d'une structure négative.

7. Corps de baignoire, en particulier cuves pour baignoire ou douche, avec une surface configurée comme surface d'occupation par un utilisateur, **caractérisé en ce que** des zones de la surface comportent une structure de surface rugueuse, lesquelles zones correspondent à la structure inverse d'une surface rendue rugueuse par un processus de rayonnement avec des granulés rugueux.

8. Corps de baignoire selon la revendication 7, **caractérisé en ce que** des zones de la surface du corps de baignoire sont configurées comme des cavités et/ou des bosses en forme de cercles ou de rayures et **en ce que** les bosses et/ou les cavités et/ou les surfaces ont été rendues rugueuses, à l'exception des cavités et/ou des bosses, alors qu'elles ont été moulées lors du moulage du corps de baignoire contre une surface du moule traitée par un processus de rayonnement avec des granulés rugueux.
